Europäisches Patentamt

European Patent Office

Office européen des brevets

(19)

(11) Veröffentlichungsnummer: **0 234 315**
B1

(12) ## EUROPÄISCHE PATENTSCHRIFT

(45) Veröffentlichungstag der Patentschrift:
24.01.90

(51) Int. Cl.⁴: **F16C 33/64**

(21) Anmeldenummer: 87101160.7

(22) Anmeldetag: 28.01.87

(54) **Vorrichtung zum Beschichten der Laufrille eines Kugellagers mit einem pulverförmigen Festschmierstoff.**

(30) Priorität: 25.02.86 DE 3605968

(43) Veröffentlichungstag der Anmeldung:
02.09.87 Patentblatt 87/36

(45) Bekanntmachung des Hinweises auf die Patenterteilung:
24.01.90 Patentblatt 90/4

(84) Benannte Vertragsstaaten:
CH FR GB LI NL SE

(56) Entgegenhaltungen:
DE-A- 2 641 899
GB-A- 493 857
US-A- 2 423 880
US-A- 3 075 279
US-A- 3 387 985
US-A- 3 389 009
US-A- 4 070 987

(73) Patentinhaber: Deutsche Forschungsanstalt für Luft-
und Raumfahrt e.V., Linder Höhe Postfach 90 60 58,
D-5000 Köln 90(DE)

(72) Erfinder: Kullmann, Werner, Deceased(DE)
Erfinder: Buck, Volker, Dr., Halweg 41,
D-4320 Hattingen(DE)

(74) Vertreter: Hoeger, Stellrecht & Partner,
Uhlandstrasse 14 c, D-7000 Stuttgart 1(DE)

ACTORUM AG

## Beschreibung

Die Erfindung betrifft eine Vorrichtung zum Beschichten der Laufrille eines Kugellagers mit den im Oberbegriff des Patentanspruches 1 angegebenen Merkmalen.

Festschmierstoffe, wie zum Beispiel Molybdändisulfid ($MoS_2$), werden beispielsweise in der Raumfahrt häufig eingesetzt. Bei einem Schichtaufbau, bei dem die oberste Schicht durch Aufbringen von pulverförmigem Schmierstoff erzeugt wird, lassen sich hervorragende tribologische Eigenschaften erzielen. Dabei erfolgt die Aufbringung von pulverförmig vorliegenden Festschmierstoffen üblicherweise durch Auftreiben oder Polieren mittels Lappen, Schwämmen und ähnlichen flexiblen Fixiergliedern (zum Beispiel W. Hellwig und G. Spengler, DEUTSCHE LUFT- UND RAUMFAHRT, Forschungsberichte 72–69 und 72–03, 1972 sowie G. Spengler, W. Hellwig und F. Wunsch in DEUTSCHE LUFT- UND RAUMFAHRT, Forschungsbericht 68–18, 1968). Die Aufbringung dieser Festschmierstoffe auf Lagerflächen ist auch mit anderen Methoden möglich, beispielsweise durch Aufbringung in Form einer Suspension und anschließender Verdampfung des Lösungsmittels oder durch Bildung in situ (DE-C 2 415 255).

Bei bekannten Verfahren ist beim trockenen Aufbringen des pulverförmigen Festschmierstoffes üblicherweise so vorgegangen worden, daß der pulverförmige Festschmierstoff in die zu beschichtende Laufrille eines Kugellagers oder dergleichen eingefüllt und dann mittels eines in diese Rille eintauchenden Poliergliedes gegen die Wand der Laufrille gedrückt worden ist. Dabei wird die Laufrille des Lagerrings nicht nur in dem Bereich beschichtet, der später von den Kugeln des Lagers überrollt wird, sondern im gesamten Laufrillenwandbereich und auch in dem daran anschließenden Bordbereich. Die Beschichtung wird normalerweise erst durch das Abrollen der Kugeln in der notwendigen Weise verfestigt; in dem Bereich, der nicht von Kugeln überrollt wird, erfolgt also keine solche Verfestigung, so daß bei dem in dieser Weise beschichteten Lager die Gefahr besteht, daß der Festschmierstoff sich in den Bereichen der Laufrille, die nicht von den Kugeln überrollt werden, später ablöst, beispielsweise bei der starken mechanischen Beanspruchung des Starts einer Rakete. Nachteilig ist bei diesem Verfahren auch, daß die Beschichtung ungleichmäßig dick werden kann, einmal dadurch, daß die Festschmiervorräte in der Laufrille durch das Polierglied ungleichmäßig an die zu beschichtende Fläche angedrückt werden können, zum anderen dadurch, daß das Polierglied gegenüber der Laufrille nicht exakt ausgerichtet ist. Diese Gefahr besteht insbesondere dann, wenn das Polierglied in bekannter Weise als Finger ausgebildet ist, der in die seitlich offene Laufrille eintaucht und längs dieser Rille bewegt wird. Es muß dann die Bewegungsbahn dieses Fingers ganz exakt auf die Geometrie der Laufrille ausgerichtet sein, und dies ist mit der erforderlichen Genauigkeit kaum möglich.

Bei bekannten Vorrichtungen zur Auftragung einer flüssigen Leimbeschichtung auf die Wände einer Nut ist es bereits bekannt, flüssigen Leim mit Hilfe eines Transportbandes in die Nut zu transportieren und durch Anlage der Nutenwände an dem Transportband die Nutenwände mit Leim zu benetzen (US-A 4 070 987). Dabei wird infolge der Fließfähigkeit der Beschichtung der gesamte Zwischenraum zwischen Transportband und Nutenwänden ausgefüllt, so daß ungleichmäßige Schichtdicken und nachträgliche Veränderungen der Schichtdicke ohne weiteres eintreten können. Die Problematik der Beschichtung einer Laufrille mit einem Festschmierstoff unterscheidet sich jedoch grundlegend von den Problemen, die bei der Benetzung einer Nutwand mit einer Flüssigkeit zu beobachten sind.

Es ist Aufgabe der Erfindung, eine gattungsgemäße Vorrichtung derart zu verbessern, daß bei der Pulverbeschichtung einer Laufrille eines Lagers nur die Bereiche mit Festschmierstoff beschichtet werden, die beim fertigen Lager von den Lagerwalzkörpern überrollt werden. Außerdem soll mit dieser Vorrichtung die Gleichmäßigkeit der Beschichtung über die gesamte beschichtete Fläche verbessert werden.

Diese Aufgabe wird bei einer Vorrichtung der eingangs beschriebenen Art erfindungsgemäß dadurch gelöst, daß das Polierglied nur in dem Bereich an der Laufrille anliegt, der von den Kugeln des Kugellagers überrollt wird, daß eine Zufuhrvorrichtung für den pulverförmigen Festschmierstoff vorgesehen ist, welche diesen außerhalb der Anlagefläche des Poliergliedes an der Laufrille auf das Polierglied in einem Bereich desselben aufbringt, der bei der Relativbewegung zwischen Polierglied und Laufrille in Kontakt mit der Laufrille gelangt, daß der Durchmesser des Poliergliedes gleich oder kleiner ist als der Laufrillendurchmesser, daß das Polierglied nur in dem Bereich an der Laufrille anliegt, in dem die Laufrille von den Kugeln des Kugellagers überrollt wird, daß eine Zufuhrvorrichtung für den pulverförmigen Festschmierstoff vorgesehen ist, welche diesen außerhalb der Anlagefläche des Poliergliedes an der Laufrille auf das Polierglied in einem Bereich desselben aufbringt, der bei der Relativbewegung zwischen Polierglied und Laufrille in Kontakt mit der Laufrille gelangt, daß der Durchmesser des Poliergliedes gleich oder kleiner ist als der Laufrillendurchmesser, und daß die jeweiligen Oberflächen des Poliergliedes und der Laufrille in ihrem Berührungsbereich gegensinnig bewegbar sind.

Bei dieser Vorrichtung wird also nicht ein vorher in die Laufrille eingebrachter Vorrat des Festschmierstoffes durch das Polierglied an die Laufrillenfläche verteilt, sondern der aufzutragende Festschmierstoff wird erst mit dem Polierglied selbst herantransportiert. Dadurch wird sichergestellt, daß nur in dem Bereich, in dem das Polierglied an der Laufrillenfläche anliegt, eine Beschichtung erfolgt. Durch entsprechende Wahl des Querschnittes des Poliergliedes kann sichergestellt sein, daß die so beschichtete Fläche genau der entspricht, die später von den Kugeln oder Wälzkörpern des Lagers überrollt wird. Beispielsweise wird bei einer halbkreisförmigen Laufrille diese nicht im gesamten Bereich des Halbkreises beschichtet, sondern nur in einem tiefer liegenden Bereich, der von den Kugeln im Betrieb überrollt wird.

Die Zufuhr des Festschmierstoffes läßt sich auf diese Weise genau dosieren, so daß kein Überschuß des Festschmierstoffes in der Laufrille vorhanden ist. Dies stellt sicher, daß die Schichtdicke im gesamten Laufrillenbereich konstant bleibt, da unkontrollierte Überschüsse, die unterschiedlich dick an die Rillenwand anpoliert werden können, nicht auftreten.

Durch die gegensinnige Relativbewegung des Poliergliedes und der Laufrille wird außerdem der Poliervorgang weiter unterstützt.

Besonders vorteilhaft ist es, wenn das Polierglied ein O-Ring ist, der in die zu beschichtende Laufrille eintaucht. Bei einer solchen Konfiguration ergeben sich keine Ausrichtprobleme, da das ringförmige Kugellager und eine Umlenkrolle für den O-Ring ohne Schwierigkeiten exakt relativ zueinander ausgerichtet werden können.

Die nachfolgende Beschreibung einer bevorzugten Ausführungsform der Erfindung dient im Zusammenhang mit der Zeichnung der näheren Erläuterung.

Es zeigen:

Figur 1: eine schematische Seitenansicht einer Beschichtungsvorrichtung und

Figur 2: eine schematische Längsschnittansicht eines Teils der Vorrichtung der Figur 1.

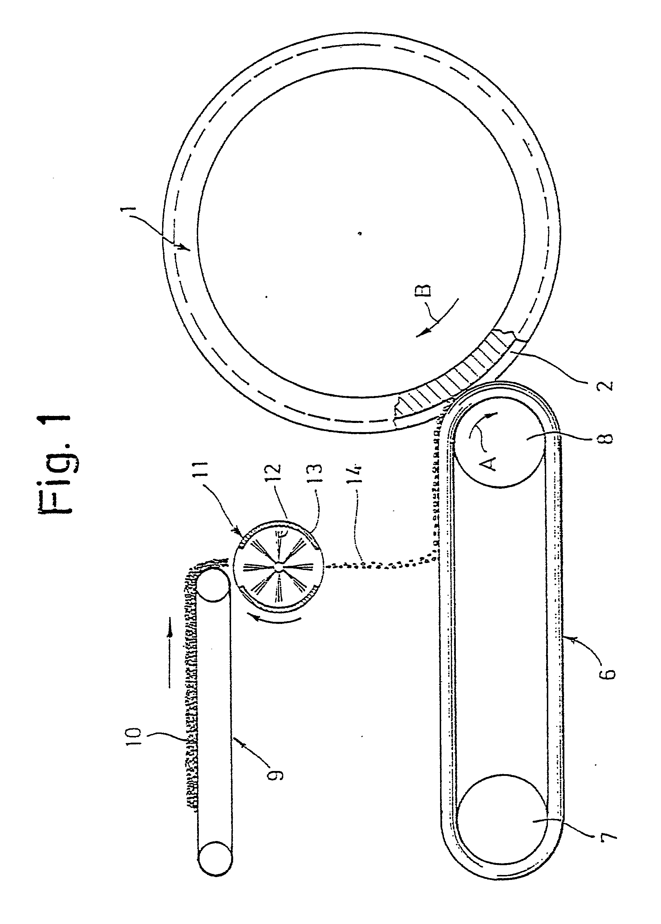

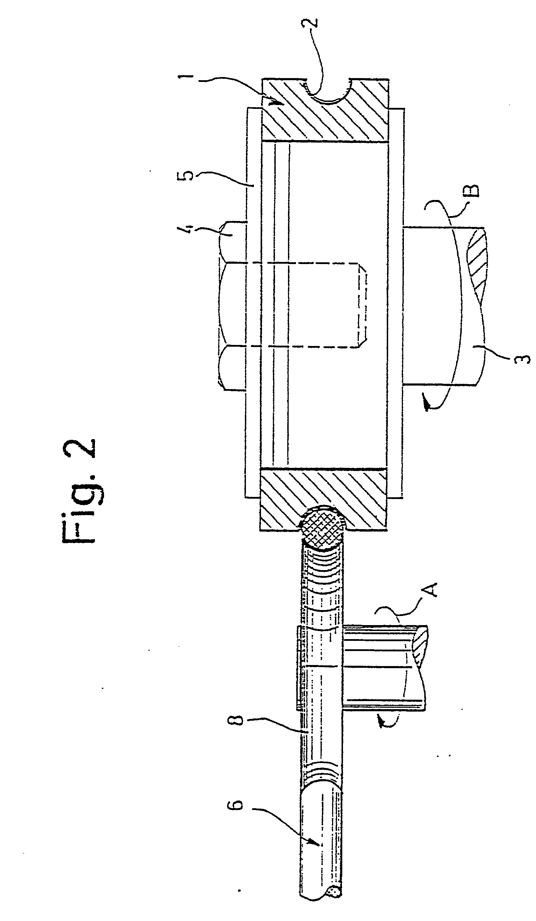

Mit der in Figur 1 dargestellten Vorrichtung kann die Laufrille 2 eines inneren Laufringes 1 eines Kugellagers beschichtet werden. Der Laufring 1 mit der im Querschnitt halbkreisförmigen Laufrille 2 wird dazu auf einer drehbaren Welle 3 mittels einer Schraube 4 und einer Spannscheibe 5 so aufgespannt, daß die Drehachse der Welle 3 genau koaxial zur Rotationsachse des Laufringes 1 verläuft (Figur 2).

Ein O-Ring 6 aus einem weichelastischen Material, zum Beispiel Butadien-Kautschuk, wird über zwei Umlenkrollen 7 und 8 geführt, von denen mindestens eine antreibbar ist. Die Anordnung erfolgt dabei so, daß der O-Ring 6 am Ende seines oberen Trums in die Laufrille 2 des Laufringes 1 eintaucht. Dazu sind die Umlenkrollen 7 und 8 genau in die Längsmittelebene des Laufringes 1 justierbar und diese Konfiguration wird mittels Federkraft an die Laufrille angepreßt (Figur 2).

Die Umlenkrollen werden so angetrieben, daß der O-Ring 6 und Laufring 1 gegensinnig umlaufen, wie dies durch die Pfeile A und B in der Zeichnung angedeutet wird.

Der Querschnitt des O-Ringes 6 ist höchstens so groß wie der Querschnitt der Laufrille 2, er kann kleiner sein.

Oberhalb des O-Ringes 6 ist eine Fördereinrichtung 9 für einen pulverförmigen Festschmierstoff 10 vorgesehen, im dargestellten Ausführungsbeispiel ein Förderband. Dieses fördert pulvrigen Festschmierstoff 10 in eine unter ihrem Ende angeordnete Zerstäube- und Dosiereinrichtung 11, im dargestellten Ausführungsbeispiel ein Bürstendosierer mit eine rotierenden Bürste 12, die in einem oben und unten offenen Gehäuse 13 gelagert ist.

## Patentansprüche

1. Vorrichtung zu Beschichtung der Laufrille (2) eines Kugellagers mit einem pulverförmigen Festschmierstoff, insbesondere Molybdändisulfid, mit einem in die Laufrille (2) eingreifenden, gegenüber der Laufrille (2) bewegbaren Polierglied (6), dadurch gekennzeichnet, daß das Polierglied (6) nur in dem Bereich an der Laufrille (2) anliegt, in dem die Laufrille (2) von den Kugeln des Kugellagers überrollt wird, daß eine Zufuhrvorrichtung (9, 11) für den pulverförmigen Festschmierstoff (10) vorgesehen ist welche diesen außerhalb der Anlagefläche des Poliergliedes (6) an der Laufrille (2) auf das Polierglied (6) in einem Bereich desselben aufbringt, der bei der Relativbewegung zwischen Polierglied (6) und Laufrille (2) in Kontakt mit der Laufrille (2) gelangt, daß der Durchmesser des Poliergliedes gleich oder kleiner ist als der Laufrillendurchmesser, und daß die jeweiligen Oberflächen des Poliergliedes und der Laufrille (29) in ihrem Berührungsbereich gegensinnig bewegbar sind.

2. Vorrichtung nach Anspruch 1, dadurch gekennzeichnet, daß das Polierglied (6) ein O-Ring ist.

3. Vorrichtung nach Anspruch 2, dadurch gekennzeichnet, daß der Abstand einer den O-Ring umlenkenden Umlenkrolle (8) von der Laufrille (2) verstellbar ist.

## Claims

1. A device for coating the track (2) of a ball-bearing with a powdery solid lubricant, in particular molybdenum disulphide, having a polishing member (6) engaging into the track (2) and movable relative to the track (2), characterised in that the polishing member (6) rests against the track only in the region in which the balls of the ball-bearing roll over the track (2); in that a device (9, 11) for supplying the powdery solid lubricant (10) is provided which, outside the area where the polishing member (6) rests on the track (2), applies the lubricant to the polishing member (6) in a region of the track which, during the relative movement between the polishing member (6) and the track (2), comes into contact with the track (2); in that the diameter of the polishing member is equal to or less than the track diameter, and in that the respective surfaces of the polishing member and of the track (29) [sic – (2)] are movable in opposite directions in their region of contact.

2. A device according to Claim 1, characterised in that the polishing member (6) is an O-ring.

3. A device according to Claim 2, characterised in that the distance between a guide roller (8) – which deflects the O-ring – and the track (2) is adjustable.

## Revendications

1. Dispositif pour enduire la gorge (2) d'un roulement à billes d'un lubrifiant solide pulvérulent, notamment de disulfure de molybdène, qui comprend un frottoir (6) qui s'engage dans la gorge (2) et qui peut se déplacer par rapport à la gorge (2), caractérisé en ce que le frottoir (6) n'est appliqué que dans la région de la gorge (2), région qui est parcourue par les billes du roulement à billes, qu'il est prévu un dispositif d'amenée (9, 11) pour le lubrifiant solide pulvérulent (10), dispositif qui applique ce lubrifiant sur le frottoir (6), en dehors de la surface de contact entre le frottoir (6) et la gorge (2), dans une région de ce frottoir, région qui entre en contact avec la gorge (2) lors du mouvement relatif qui se produit entre le frottoir (6) et la gorge (2), et que les surfaces du frottoir et de la gorge (2) peuvent se déplacer l'une en sens inverse de l'autre dans leur région de contact.

2. Dispositif selon la revendication 1, caractérisé en ce que le frottoir (6) est une bague torique.

3. Dispositif selon la revendication 2, caractérisé en ce que la distance entre une poulie de renvoi (8) qui sert à renvoyer la bague torique et la gorge (2) est réglable.

# Fig. 1

EP 0 234 315 B1

# Fig. 2

EP 0 234 315 B1